Europäisches Patentamt

European Patent Office

Office européen des brevets

(11) Publication number: **0 057 886**

**B1**

(12) **EUROPEAN PATENT SPECIFICATION**

(45) Date of publication of patent specification: **06.11.85**

(51) Int. Cl.⁴: **B 62 D 25/06**

(21) Application number: **82100677.2**

(22) Date of filing: **01.02.82**

(54) **Preformed liner structure, particularly for passenger car roofs.**

(30) Priority: **10.02.81 IT 6718081**

(43) Date of publication of application:
**18.08.82 Bulletin 82/33**

(45) Publication of the grant of the patent:
**06.11.85 Bulletin 85/45**

(84) Designated Contracting States:
**DE FR GB SE**

(56) References cited:
**DE-A-1 932 780**
**DE-A-2 608 392**
**DE-U-6 607 995**
**GB-A-1 123 796**
**GB-A-1 171 258**

(73) Proprietor: **FIAT AUTO S.p.A.**
**Corso Giovanni Agnelli 200**
**I-10135 Torino (IT)**

(72) Inventor: **Gaggero, Attilio**
**Via Cuneo, 33**
**I-12080 Pianfei (Cuneo) (IT)**

(74) Representative: **Modiano, Guido et al**
**MODIANO & ASSOCIATI S.A.S. Via Meravigli, 16**
**I-20123 Milan (IT)**

Courier Press, Leamington Spa, England.

# Description

This invention relates to a structural preformed liner, particularly for passenger car roof panels and roof panels of motor vehicles in general.

It is known that current passenger cars utilize reinforcing carlines mounted on the interior of the car body at the passenger compartment roof area. Such carlines are only intended to prevent the so-called "panting" of the car body roof sheet, that is the deformation of the sheet as resulting from vibration and/or aerodynamic pressure stresses and enhanced by the panel flexibility deriving from its large area and small thickness; the panting of the car body roof being especially noticeable in modern design cars which are characterized by the presence of large relatively flat surfaces. The utilization of inner carlines made integral with the car body structure is, however, complicated by the fact that the carlines cannot be anchored to the roof sheet — such as by spot welding — if continuity breaks and a wavy surface, clearly visible from the outside, is to be avoided.

The problem is obviated by interposing between a carline — generally of channel configuration — and the roof sheet a filler of expanded polymeric material. This material is introduced into the carline cavity in a precured state, and is then cured and expanded to provide perfect adhesion to the roof sheet. The operation involves an accurate proportioning and correct distribution of the material, in order to avoid the creation of tensions which would deform the sheet when overapplied, or of an insufficient layer, with attendant generation of noise at the carline-sheet interface, when underapplied.

Moreover, the provision of the intervening expanded layer and the insertion procedures therefor interfere with the prior electrophoresis treatment, leaving the inner portions of the carlines unprotected by said treatment. Another drawback connected with the utilization of carlines as indicated, is that the manufacture and installation of roof self-supporting liners, where provided, is further complicated, or that of worsening the aesthetic appearance of the car roof interior surface where said liners are omitted.

GB—A—1 123 796 discloses a vehicle roof liner as defined in the precharacterising part of Claim 1. The reinforcing portion of the liner is not fixed on the car body and does not provide a load-bearing structure and cannot eliminate the cited drawbacks.

Thus, the task of the present invention is to eliminate the cited drawbacks.

This task is achieved by the invention as defined in the characterising clause of Claim 1.

According to one embodiment of the invention, the load-bearing structure or portion is constructed by incorporating at least one carline or rib formation of metal or a rigid material, such as plastics or wood, in the material of the preformed liner; the carline being provided with salient ends formed with holes wherethrough fastening screws are passed to engage in corresponding threaded seats or sockets provided in the car body rib frame surrounding the roof.

According to a modified embodiment of this invention, which is specially suitable for large size roofs, the load-bearing structure comprises a small rigid grid frame also embedded in the material of the preformed liner and having end or terminating elements which can be removably secured as by means of screws or the like fasteners to said car body rib. The preformed liner, of a self-supporting type known per se, is molded from a material selected from a group which includes mixtures of mats and bats with heat setting resins, heat formable or injectable foamed cell polyurethane, wood fiber admixed with heat setting resins, cell polypropylene, mouldable cardboard, and combinations thereof. The load-bearing structure, carlines or small frame, is embedded in the liner material by a co-moulding process.

Further features and advantages of the invention will be apparent from the following detailed description, with reference to the accompanying drawings, given herein by way of example only and where:

Figure 1 is a cutaway perspective view of the body of a passenger car incorporating the preformed structural liner of this invention;

Figure 2 is a perspective bottom view of this structural liner;

Figure 3 is an enlarged scale sectional view taken along the line III—III of Figure 2;

Figure 4 is a perspective bottom view of a modified embodiment of this liner; and

Figure 5 is a perspective view showing in detail the load-bearing structure included in the liner of Figure 4.

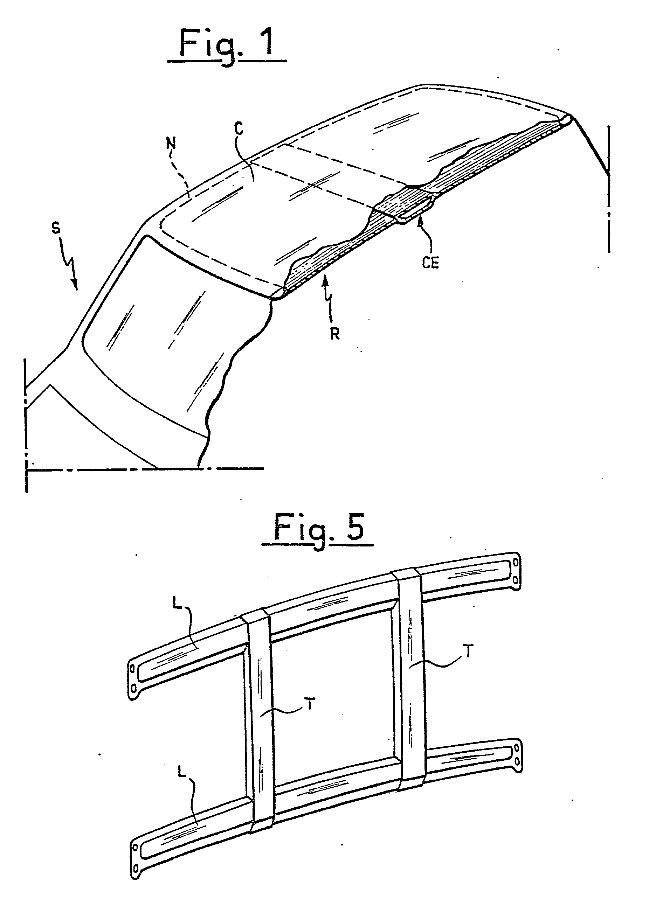

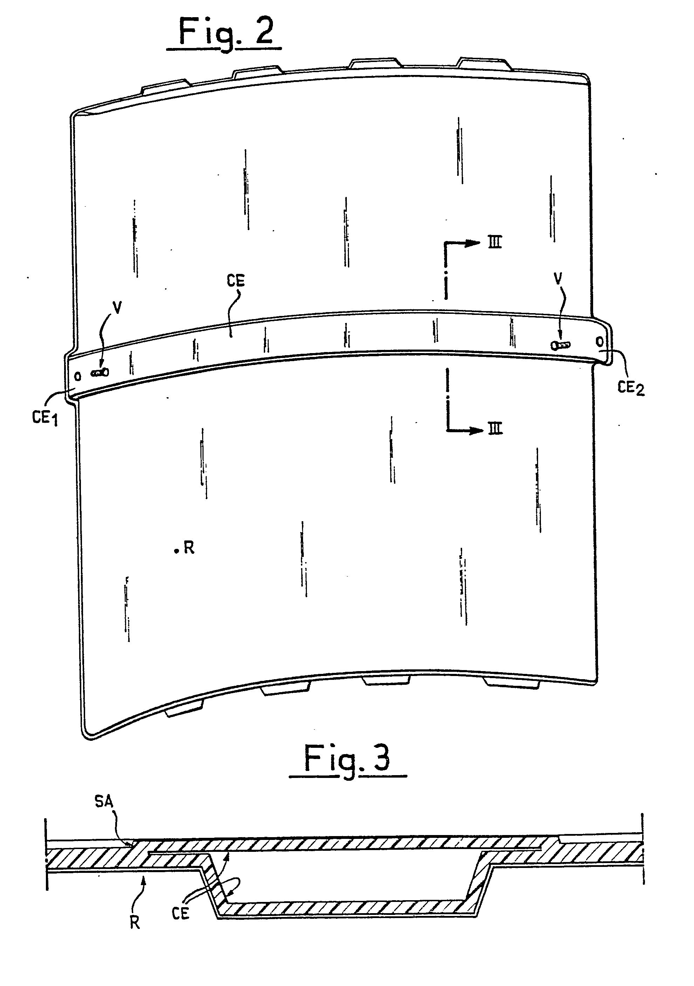

With initial reference to Figures 1 to 3, the reference character C designates the roof panel of the car body S of a generical passenger car, and R designates the self-supporting structural liner, located on the inside of the car body roof panel and juxtaposed to the roof sheet C. In accordance with this invention, the liner R incorporates, embedded therein, a carline CE of a rigid material selected from the group comprising metals, rigid plastics, wood, and fibrous materials admixed with heat setting resins. In the example illustrated in Figure 3, the carline CE is formed from sheet steel and has a closed channel profile characterized by a high moment of inertia to bending as well as light weight. As clearly shown in Figure 3, the material of the liner R matches the profile of the carline to form, on the side facing the roof sheet, a bearing flange or sole SA intended to contact the roof sheet in order to prevent it from "panting". The carline CE has salient ends $CE_1$—$CE_2$ which are suitably arched and provided with holes, wherethrough fastening screws V can be inserted to engage in corresponding threaded holes provided in the rib N overlying the frame for the car side doors. The screws V provide an independent and removable connection of the carline to the car body, which allows the assembling and disassembling of the liner R while ensuring the required indeformability and rigid mounting of the carline. The liner, of a type known per se, is formed from any material or combination of materials selected from a group which comprises: mats and bats fixed with heat setting resins, expanded polyurethane with a heat formable or injectable cell structure, wood fibers or vegetal fibers admixed with heat setting resins, cell polypropylene, and mouldable cardboard. The liner is hot moulded and the carline is incorporated by a co-moulding process. The cited materials, while having such characteristics as to ensure the self-supporting feature of the liner, are highly soft and have in general marked sound deadening properties, thereby they will afford, at the contact area between the flange SA of the carline and roof sheet C, a continuous and moderately elastic support capable of ensuring a complete suppression of the generated noise.

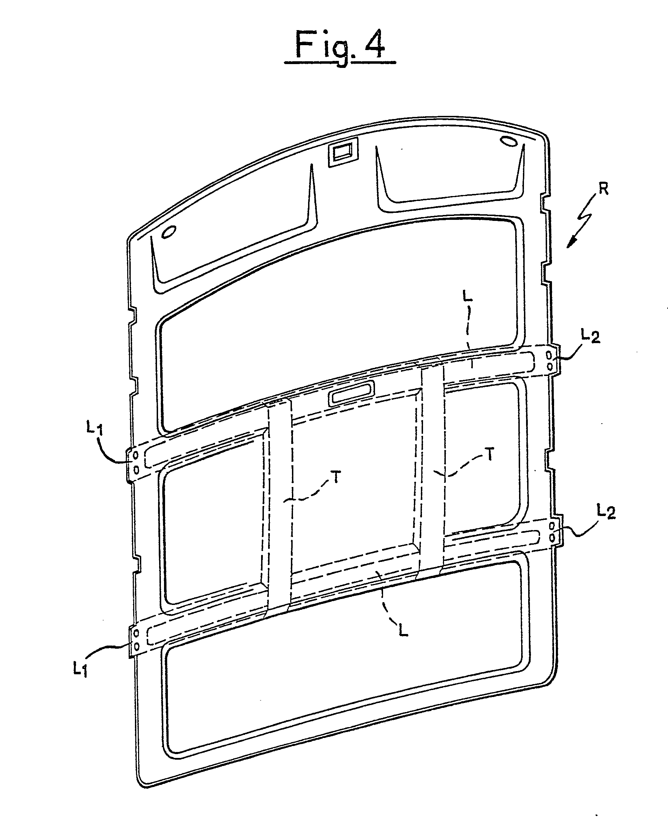

In Figure 4, there is shown a modified embodiment wherein the liner R incorporates a load-bearing structure comprising a small grid metal frame TM, of double "H" configuration, which includes longitudinal girders L and cross-beams T; this structure being advantageous with large size roof sheet C. The longitudinal girders L have salient ends $L_1$—$L_2$ provided with holes allowing fastening screws therethrough removably, and the structure is advantageously formed from sheet steel by pressing. Said small frame is also fully incorporated by co-moulding in the material of the liner R, which has on its exposed side a surface pattern characterized by the presence of ribs corresponding to the frame members. The cavities of the carlines, longitudinal girders and cross-beams may be advantageously utilized to route electric cables therethrough and/or to circulate ventilation and conditioning air, while said carlines and frame provide adequate support for mounting lighting and/or conditioned air outlet elements.

Of course, based upon the principle of this invention, the implementation details and embodiments thereof may be widely modified relatively to what has been herein described and illustrated by way of example without departing from the invention scope.

## Claims

1. A preformed liner structure, particularly for passenger car roofs, the structure having reinforcing portion (CE, L, T) embedded in and/or moulded with the material of the liner structure (R), characterized in that said reinforcing portion is a load-bearing portion (CE, L, T) which has salient ends ($CE_1$, $CE_2$, $L_1$, $L_2$) for independent and removable fastening to the car body to provide in use support for the sheet member of the car body roof (C) to prevent said roof sheet (C) from deforming significantly.

2. A structure according to claim 1, wherein the load-bearing portion is in the form of at least one rib formation, wherein said salient ends are arched.

3. A structure according to claim 1, wherein said load-bearing portion is in the form of a rigid grid frame having salient end elements ($L_1$—$L_2$) for connection with the car body.

4. A structure according to claims 1—3, wherein said salient ends ($CE_1$, $CE_2$ and $L_1$, $L_2$) have throughholes provided therein and screw means for fastening said salient ends on to an inner rib (N) provided on the car body around the roof panel.

5. A structure according to the preceding claims, wherein the rigid material of the rib formation (CE) or small frame (TH) is selected from a group comprising metal, plastics, and wood materials.

6. A structure according to the preceding claims, wherein said rib formation (CE) or small frame (TH) are co-moulded with the material of said liner (R).

7. A structure according to the preceding claims, wherein said liner (R) material is mouldable and selected from a group including: mats and bats mixed with heat setting resins, heat formable or injectable foamed cell polyurethane, wood fiber admixed with heat setting resins, cell polypropylene, mouldable cardboard, and combinations thereof.

8. A structure according to the preceding claims, wherein the liner (R) material matches the profile of the load-bearing portion (CE—TL) incorporated therein to form, on the side facing the roof panel sheet (C) of the car body, a bearing sole (SA) adapted to contact said roof panel sheet (C).

9. A structure according to the preceding claims, wherein said rib formation (CE) or frame members (TL) are hollow to define passageways for electric cables and/or conditioning air ducts.

## Revendications

1. Structure de garniture préformée, particulièrement pour des pavillons de véhicules à passagers, cette structure comportant des parties de renforcement (CE, L, T) noyées dans la matière de la structure de garniture (R) et/ou moulées dans cette matière, caractérisée en ce que ladite partie de renforcement est une partie de support de charge (CE, L, T) qui comporte des extrémités ($CE_1$, $CE_2$, $L_1$, $L_2$) permettant la fixation de façon indépendante et amovible de ladite partie de support de charge à la carrosserie du véhicule de manière qu'elle assure, pendant l'utilisation, un support à la tôle du pavillon (C) du véhicule de manière à empêcher que cette tôle (C) se déforme de façon importante.

2. Structure selon la revendication 1, dans laquelle la partie de support de charge se présente sous la forme d'au moins une poutre profilée, lesdites extrémités saillantes étant arquées.

3. Structure selon la revendication 1, dans laquelle ladite partie de support de charge se présente sous la forme d'un bâti rigide analogue à une grille et comportant des éléments d'extrémités (L$_1$—L$_2$) faisant saillie en vue d'une fixation à la carrosserie du véhicule.

4. Structure selon les revendications 1—3, dans laquelle lesdites extrémités saillantes (CE$_1$, CE$_2$ et L$_1$, L$_2$) comportent des trous traversants et des moyens formant vis, en vue de la fixation desdites extrémités saillantes sur une nervure intérieure (N) formée sur la carrosserie du véhicule autour du pavillon.

5. Structure selon les revendications précédentes, dans laquelle la matière rigide de la poutre profilée (CE) ou du petit bâti (TH) est choisie parmi un groupe comprenant le métal, les matières plastiques et les matières à base de bois.

6. Structure selon les revendications précédentes, dans laquelle ladite poutre profilée (CE) ou le petit bâti (TH) sont moulés en même temps que la matière da ladite garniture (R).

7. Structure selon les revendications précédentes, dans laquelle ladite matière de la garniture (R) est moulable et choisie parmi un groupe comprenant: les mats et les feutres mélanges avec des résines thermodurcissables, le polyuréthanne cellulaire thermoformable ou injectable, la fibre de bois mélangée avec des résines thermodurcissables, le polypropylène cellulaire, le carton moulable, et les combinaisons de ces produits.

8. Structure selon les revendications précédentes, dans laquelle la matière de la garniture (R) s'adapte au profil de la partie de support de charge (CE—TL) incorporée dans cette matière de manière à former, sur le côté orienté vers la tôle (C) du pavillon de la carrosserie du véhicule, un support ou semelle (SA) adapté pour porter contre ladite tôle (C) du pavillon.

9. Structure selon les revendications précédentes, dans laquelle ladite poutre profilée (CE) ou les éléments de bâti (TL) sont creux de manière à délimiter des passages pour les câbles électriques et/ou des conduits d'air de climatisation.

**Patentansprüche**

1. Vorgeformte Auskleidung, insbesondere für Dächer von Personenkraftwagen, mit einem Verstärkungsteil (CE, L, T), der im Auskleidungsmaterial (R) eingebettet und/oder in dieses eingeformt ist, dadurch gekennzeichnet, dass der genannte Verstärkungsteil ein lasttragender Teil (CE, L, T) mit aufstrebenden Enden (CE$_1$, CE$_2$, L$_1$, L$_2$) für die unabhängige und lösbare Befestigung an der Wagenkarosserie ist, um bei der Benützung eine Unterstützung für das Blech des Wagendaches (C) zu schaffen und eine merkliche Deformierung des Dachbleches (C) zu verhindern.

2. Auskleidung nach Anspruch 1, dadurch gekennzeichnet, dass der lasttragende Teil die Form wenigstens einer Rippenausbildung hat, wobei die genannten aufstrebenden Enden gekrümmt sind.

3. Auskleidung nach Anspruch 1, dadurch gekennzeichnet, dass der lasttragende Teil die Form eines steifen Gitterrahmens mit aufstrebenden Endelementen (L$_1$, L$_2$) zur Verbindung mit der Wagenkarosserie hat.

4. Auskleidung nach den Ansprüchen 1 bis 3, dadurch gekennzeichnet, dass die genannten aufstrebenden Enden (CE$_1$, CE$_2$ und L$_1$, L$_2$) Durchgangslöcher und Schraubeinrichtungen zu ihrer Befestigung an einer an der Wagenkarosserie um das Dachblech vorgesehenen Innenrippe (N) aufweist.

5. Auskleidung nach den vorhergehenden Ansprüchen dadurch gekennzeichnet, dass das steife Material der Rippenausbildung (CE) oder des kleinen Rahmens (TH) aus der Gruppe umfassend Metalle, Kunststoffe und Holzmaterialien ausgewählt ist.

6. Auskleidung nach den vorhergehenden Ansprüchen, dadurch gekennzeichnet, dass die Rippenausbildung (CE) oder der kleine Rahmen (TH) zusammen mit dem Material der Auskleidung (R) geformt sind.

7. Auskleidung nach den vorhergehenden Ansprüchen, dadurch gekennzeichnet, dass das Material der Auskleidung (R) eine Formmasse und asu der Gruppe umfassend Matten und Watten im Gemisch mit durch Wärme härtbaren Harzen, durch Wärme formbaren oder spritzbaren Polyurethan-Zellschaum, Holzfasern im Gemisch mit durch Wärme härtbaren Harzen, Zell-Polypropylen, Presspappe und Kombinationen hievon ausgewählt ist.

8. Auskleidung nach den vorhergehenden Ansprüchen, dadurch gekennzeichnet, dass das Material der Auskleidung (R) an das Profil des darin inkorporierten lasttragenden Teiles (CE—TL) angepasst ist, um an der dem Dachblech (C) der Karosserie gegenüberliegenden Seite einen mit dem Dachblech (C) in Berührung gelangenden Stützabsatz (SA) zu bilden.

9. Auskleidung nach den vorhergehenden Ansprüchen, dadurch gekennzeichnet, dass die Rippenausbildung (CE) oder Rahmenteile (TL) hohl ausgebildet sind, um Kanäle für elektrische Kabel und/oder Klimatisierungsluftleitungen zu bilden.

## Fig. 1

## Fig. 5

1

## Fig. 2

## Fig. 3

# Fig. 4